# EUROPÄISCHE PATENTSCHRIFT

(11) **EP 0 961 704 B1**
(45) Veröffentlichungstag und Bekanntmachung des Hinweises auf die Patenterteilung: **02.05.2002**
(21) Anmeldenummer: 98912329.4
(22) Anmeldetag: 19.02.1998
(51) Int. Cl.: B60J 7/22

(54) **SCHIEBEDACH FÜR KRAFTFAHRZEUGE MIT REDUZIERTEM SCHIEBEDACHWUMMERN**
MOTOR VEHICLE SUNROOF WITH REDUCED BUFFETING NOISE
TOIT OUVRANT SUR VEHICULES AVEC ATTENUATION DES COUPS SOURDS

(30) Priorität: 20.02.1997 DE 19706673
(43) Veröffentlichungstag der Anmeldung: 08.12.1999
(73) Patentinhaber: DaimlerChrysler AG, 70567 Stuttgart (DE)
(72) Erfinder: BORCHERS, Ingo, D-88690 Uhldingen (DE); BORGWARDT, Ralph, D-70599 Stuttgart (DE); BRÄHLER, Boris, D-88045 Friedrichshafen (DE); LÄMMLEIN, Stephan, D-88667 Markdorf (DE)
(86) Internationale Anmeldenummer: EP9800935
(87) Internationale Veröffentlichungsnummer: WO9836926

(56) Entgegenhaltungen:
- DE-U- 9 007 234

## Beschreibung

Die Erfinduna betrifft ein Schiebedach für Kraftfahrzeuge, mit dem das häufig bei Kraftfahrzeugen mit geöffnetem Schiebedach auftretende Resonanzgeräusch, das sogenannte Schiebedachwummern (engl. buffeting noise) wesentlich verringert oder sogar ganz beseitigt wird.

Im Falle eines geöffneten Schiebedaches kann bei niedrigen Geschwindigkeiten, z.B. um V=50km/h eine unangenehme tieffrequente Resonanz des Fahrzeuginnenraumes auftreten. Diese wird als Schiebedachwummem oder einfach als Wummern bezeichnet und ist vornehmlich bei Großraumlimousinen und Kombifahrzeugen anzutreffen. Das Wummern nimmt mit größer werdenden Schiebedächern, wie sie bei modernen Fahrzeugen immer häufiger anzutreffen sind, zu.

Für die weitere Beschreibung werden im folgenden einige Begriffe in Bezug das Schiebedach definiert: Der Schiebedachausschnitt ist der Ausschnitt des Schiebedaches im äußeren Dachblech des Fahrzeuges. Die Schiebedachöffnung ist die Öffnung zum Fahrzeuginnenraum, welche durch die Ausgestaltung der oberen Abgrenzung des Fahrzeug-Innenraumes definiert wird. Ein beweglich angebrachter Schiebedeckel dient zum Öffnen und Schließen des Schiebedaches. Je nach der aktuellen Position des Schiebedeckels verdeckt dieser einen Teil der Schiebedachöffnung, so daß sich eine lichte Öffnung zum Fahrzeuginnenraum ergibt, die im folgenden als resultierende lichte Schiebedachöffnung bezeichnet wird. Der Abstand von der in Fahrtrichtung gesehen vorderen Kante der resultierenden lichten Schiebedachöffnung zu deren hinterer Kante ist die Öffnungslänge der resultierenden lichten Schiebedachöffnung.

Physikalisch läßt sich das Auftreten des Wummerns durch das Prinzip von Erreger und Resonanzkörper erklären. Die Rolle des Erregers übernimmt die Scherschicht über der resultierenden lichten Schiebedachöffnung, welche durch das Aufeinandertreffen der Fahrzeugaußenströmung und der Luft des Fahrzeuginnenraumes entsteht. Die Funktion des Resonanzkörpers übernimmt der Pkw-Innenraum. Dieser läßt sich bei geöffnetem Schiebedach als Helmholtz-Resonator auffassen; d.h. die Resonanzfrequenz des Innenraumes ist abhängig von der Größe der resultierenden lichten Schiebedachöffnung und vom Innenraumvolumen des Fahrzeuges.

Die Erregung des Innenraumes zur Resonanz kann als Folge der Instabilität der Scherschicht erklärt werden. Bereits kleinste Störungen im vorderen Bereich des Schiebedaches reichen aus, um die Scherschicht zum Schwingen anzuregen. Diese Schwingungen werden stromab angefacht. Die so gestörte Strömung trifft auf die hintere Kante der resultierenden lichten Öffnung des Schiebedaches auf. Sie wird periodisch alternierend über diese Kante gespült und in den Fahrzeuginnenraum hineingedrückt, wobei letzteres eine Druckwelle verursacht. Von dieser Druckwelle läuft ein Anteil stromauf und führt dort in fester Phasenbeziehung zur vorhergehenden Störung zu einer weiteren Anregung der Scherschicht. Auf diese Weise entsteht eine sich selbst verstärkende Scherschichtoszillation mit einer dominierenden Hauptfrequenz, welche sich mit zunehmenden Fahrgeschwindigkeiten zu höheren Frequenzen verschiebt und von der Öffnungslänge der resultierenden lichten Schiebedachöffnung abhängt. Stimmt diese Erregerfrequenz mit der Resonanzfrequenz des Innenraumes überein und ist die Amplitude der Oszillationen im in Fahrtrichtung hinteren Bereich der resultierenden lichten Schiebedachöffnung hinreichend groß, so wird dies als Schiebedachwummern wahrgenommen.

Aus dem Dokument DE 90 07 234 U1 ist ein Schiebedach für Kraftfahrzeuge mit einem beweglichen Schiebedeckel zum Abdecken einer Schiebedachöffnung bekannt, an deren Vorderkante ein Windabweiser schwenkgelagert ist. Um den Windabweiser bei geschlossenem Schiebedach in einem kleinen Bauraum unterzubringen und um die Windabweiserfläche bei geöffnetem Schiebedach vergrößern zu können, ist an dem Windabweiser wenigstens eine zusätzliche Windabweiserplatte beweglich gelagert. Die zusätzliche Windabweiserplatte ist an der Oberseite des Windabweisers angeordnet und parallel zur Windabweiserfläche in Richtung nach hinten und vorne beweglich.

Der Erfindung liegt die Aufgabe zugrunde, ein Schiebedach zu schaffen, mit dem gezielt der aerodynamische Erregungsmechanismus des Wummerns gestört werden kann. Das Wummern soll auf ein Niveau abgesenkt werden, welches subjektiv nicht mehr wahrnehmbar ist.

Diese Aufgabe wird durch den Gegenstand des Patentanspruchs 1 gelöst. Vorteilhafte Ausbildungen der Erfindung sind Gegenstand weiterer Ansprüche.

Bei der erfindungsgemäßen Vorrichtung handelt es sich um eine Modifikation der Geometrie der Ecken von Schiebedächern mit im wesentlichen rechteckiger oder trapezförmiger resultierender lichter Schiebedachöffnung durch vollständige oder teilweise Abdeckung von mindestens einem der in Fahrtrichtung gesehen hinteren Eckenbereiche der resultierenden lichten Schiebedachöffnung. Diese erfindungsgemäße Modifikation kann z.B. folgendermaßen realisiert werden:
- Durch eine Weiterentwicklung von Schiebedächer mit im wesentlichen rechteckiger, aber auch trapezförmiger resultierender Schiebedachöffnung, beispielsweise durch das Vorsehen von Klapp-, Schiebe-, Drehoder Spannmechanismen zum Ausfahren oder Spannen unterschiedlicher Ausführungsformen der erfindungsgemäßen Abdeckung bei wummerkritischen Öffnungslängen der resultierenden lichten Schiebedachöffnung oder durch eine entsprechende Nachrüstung vorhandener Schiebedächer mit im wesentlichen rechteckiger oder trapezförmiger resultierender lichter Schiebedachöffnung.
- Neu zu entwickelnde Schiebedächer können alternativ eine resultierende lichte Schiebedachöffnung erhalten, welche ausgehend von einer im wesentlichen rechteckigen resultierenden lichten Schiebedachöffnung eine den o.g. Eckenabdeckung entsprechende Form erhält.
- Auch eine Kombination aus teilweise Formänderung einer ursprünglich im wesentlichen rechteckigen resultierenden lichten Schiebedachöffnung und teilweise zufügbarer Abdeckung ist denkbar.

Die Fluktuationen der Scherschichtströmung in der Schiebedachöffnung als Erreger der Resonanz nehmen von der Fahrzeugmitte nach außen zu. Da die Störungen in der Scherschicht wie oben beschrieben auch in Strömungrichtung zunehmen, sind die Fluktuationen im hinteren äußeren Bereich der rechteckigen oder trapezförmigen resultierenden lichten Schiebedachöffnung am arößten. Mit der erfindungsgemäßen Vorrichtung werden die äußeren Fluktuationen, welche den Hauptanteil an der Erregung des Innenraumes haben, gezielt unterbunden bzw. so gestört, daß die Resonanzschwingung als Wummem nicht mehr wahrnehmebar ist.

Die erfindungsgemäße Vorrichtung ermöglicht es, die Öffnungslänge der resultierenden lichten Schiebedachöffnung mehr als bisher zu vergrößern, ohne daß Wummern auftritt. Bei höheren Fahrgeschwindigkeiten treten keine zusätzlichen von der Vorrichtung verursachten Strömungsgeräusche auf.

Die Wirksamkeit der erfindungsgemäßen Vorrichtung läßt sich mit beliebigen in der Grundkonfiguration wummernden Fahrzeugen nach entsprechender Anpassung an deren jeweilige physikalisch-geometrischen Gegebenheiten in Windkanal- und Fahrversuchen nachweisen. Dieser Nachweis kann sowohl durch subjektive Wahrnehmung als auch meßtechnisch erfolgen.

Die mit der Erfindung verbundenen Vorteile sind darin zu sehen, daß mit keiner anderen bekannten Maßnahme von vergleichbar geringem Aufwand das Wummern bei vergleichbaren Öffnungslängen der resultierenden lichten Schiebedachöffnung derartig reduziert werden kann, ohne zusätzliche äußerst unerwünschte Nebengeräusche zu erzeugen. Mit Windabweisern oder sonstigen im Bereich der in Fahrtrichtung vorderen Kante des Schiebedachausschnittes eingebrachten Strömungsstörungen ist zwar häufig eine erhebliche Absenkung des Wummerpegels möglich, bei höheren Geschwindigkeiten treten jedoch von diesen Vorrichtungen erzeugte Strömungsgeräusche, d.h. Rauschen oder Pfeifen, auf. Bei von Kunden akzeptierten Abmessungen des Windabweisers ist eine vollständige Beseitigung des Wummems bei bestimmten Fahrzeugtypen mitunter nicht zu erzielen. Auch eine Reduzierung des Wummerns durch einen nur teilweise geöffneten Schiebedeckel und somit reduzierter resultierender lichter Schiebedachöffnung bei Fahrgeschwindigkeiten. welche zur Ausbildung des Wummerns neigen, ist aufgrund der erheblichen Sichtversperrung unerwünscht. Bei der vorgeschlagenen Vorrichtung bleibt die Sichtversperrung auf ein erträgliches Maß reduziert, die Öffnungslänge der resultierenden lichten Schiebedachöffnung im Mittenbereich sogar unverändert. Ein zusätzliches Rauschen oder Pfeifen bei höheren Geschwindigkeiten ist nicht aufgefallen.

Mögliche Anwendungsbereiche der Erfindung liegen neben der Reduktion des Schiebedachwummerns bei ähnlich gearteten Problemstellungen mit Hohlräumen (Cavities), bei welchen eine instabile Scherschicht Hohlraum-Resonanzen verursacht. Beispielsweise ist eine Anwendung bei einer wummerähnlichen aber wesentlich amplitudenstärkeren Anregung des Fahrzeuginnenraumes durch eine geöffnete Seitenscheibe im höheren Geschwindigkeitsbereich denkbar. Auch könnten Resonanzen von Schächten an Flugzeugen (z.B. Fahrwerksschacht) durch einen Einbau der Vorrichtung oder vergleichbare Formgebung vermieden werden.

Im folgenden wird die erfindungsgemäße Vorrichtung anhand von möglichen Ausführungsformen näher erläutert. Hierbei wird von einem beispielhaften Schiebedach mit einer im wesentlichen rechteckigen resultierenden lichten Schiebedachöffnung ausgegangen, deren hintere Eckengeometrie durch nachträglich einzubringende Elemente zur Abdeckung modifiziert wird. Aufgrund der Vielfalt der möglichen Eckengeometriemodifikationen können nur einige Beispiele aufgeführt werden. Ausführungsbeispiele der erfindungsgemässen Vorrichtung mit zur Anwendung kommender hinzufügbarer Abdeckung der Eckenbereiche einer im wesentlichen trapezförmigen resultierenden lichten Schiebedachöffnung sind wegen der Ähnlichkeit der zu verwendenden Ausführungsformen nicht gesondert aufgeführt. Die Ausführungsbeispielen der erfindungsgemäßen Vorrichtung mit zur Anwendung kommender Formänderung einer ursprünglich im wesentlichen rechteckigen oder trapezförmigen resultierenden lichten Schiebedachöffnung ergeben eine den nachträglich zuzufügenden Abdeckungen entsprechende resultierende lichte Schiebedachöffnung und sind daher ebenfalls nicht extra aufgeführt.

Es zeigen:
- Fig. 1: eine Draufsicht auf ein erfindungsgemäßes Schiebedach;
- Fig. 2: eine Querschnittszeichnung (oben) und eine Schrägansicht (unten) eines erfindungsgemäßen Schiebedachs;
- Fig. 3: eine Querschnittszeichnung (oben) und eine Schrägansicht (unten) eines erfindungsgemäßen Schiebedachs;
- Fig. 4: eine Draufsicht auf ein erfindungsgemäßes Schiebedach;
- Fig. 5: eine Querschnittszeichnung (oben) und eine Schrägansicht (unten) eines erfindungsgemäßen Schiebedachs;
- Fig. 6: eine Draufsicht auf ein erfindungsgemäßes Schiebedach, sowie mehrere beispielhafte Varianten zur Anbringung der Abdeckung in der horizontalen Ebene des Schiebedeckels;
- Fig. 7: eine Draufsicht auf ein erfindungsgemäßes Schiebedach, sowie mehrere beispielhafte geometrische Varianten für die Abdeckung;
- Fig. 8 'a' und Fig. 8 'b': zwei dreidimensionale Schrägansichten auf erfindungsgemäße Schiebedächer;
- Fig. 9 'a' und Fig. 9 'b': zwei Draufsichten auf erfindungsgemäße Schiebedächer mit unterschiedlichen Mechanismen zur Zuschaltung der Abdeckung;
- Fig. 10: Skizzen eines Mercedes-Benz Serienfahrzeuges S202 (C-Klasse-Kombi) in Seitenansicht und Draufsicht;
- Fig. 11: eine Technische Skizze in Draufsicht auf das erfindungsgemäße Schiebedach an Bord eines Mercedes-Benz S202 (C-Klasse-Kombi).

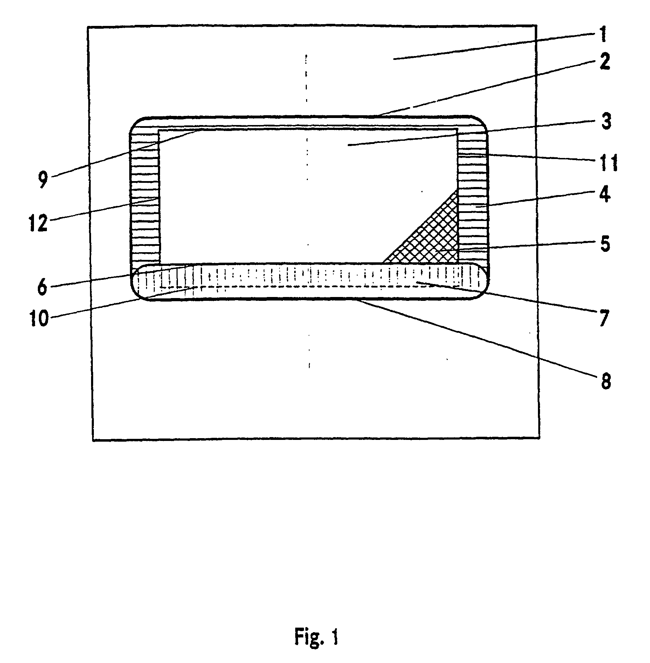

In den Fig.1 bis Fig. 5 sind vorteilhafte Ausführungsformen der erfindungsgemäßen Vorrichtung im Hinblick auf die Höhe, in der die Abdeckung angeordnet ist, dargestellt.

Fig. 1 zeigt die Draufsicht auf eine Ausführung eines erfindungsgemäßen Schiebedachs. Die Fahrtrichtung des Fahrzeuges (=vorne) entspricht dem oberen Bildrand. Es sind erkennbar das äußere Dachblech 1 des Fahrzeuges, der vordere Rand 2 des Schiebedachausschnittes im Dachblech, das unterhalb des Dachbleches 1 befindliche Innendach 4, welches die obere Abgrenzung des Fahrzeuginnenraumes bildet. Im Innendach befindet sich die Schiebedachöffnung mit der vorderen Kanten 9, der hinteren Kante 10, der linken Kante 11 und der rechten Kante 12. Desweiteren erkennbar sind die hintere Kante 8 des Schiebedachausschnittes im äußeren Dachblech 1 und der zwischen äußerem Dachblech 1 und Innendach 4 befindliche zurückgefahrene Schiebedeckel 7. Der bisher beschriebene Aufbau eintspricht einem herkömmlichen Schiebedach mit im wesentlichen rechtwinkliger resultierender Schiebedachöffnung. Erfindungsgemäß ist im hinteren rechten Bereich der resultierenden lichten Schiebedachöffnung zusätzlich eine Abdeckung 5 angeordnet. Die resultierende lichte Schiebedachöffnung 3 wird ohne die Modifikation 5 nach vome und nach den Seiten wie die Schiebedachöffnung im Innendach 4 von den Kanten 9, 11 und 12 begrenzt. Nach hinten wird die resultierende lichte Schiebedachöffnung 3 abhängig von der aktuellen Stellung des Schiebedeckels 7 entweder begrenzt von dessen vorderer Kante 6, wenn diese sich in Fahrtrichtung vor der hier gestrichelt gezeichneten Kante 10 befindet oder andernfalls, wenn sich die Kante 10 in Fahrtrichtung vor der Kante 6 des Schiebedeckels 7 befindet, von der Kante 10 und entspricht so der Schiebedachöffnung im Innendach 4. Der Schiebedeckel 7 ist beweglich angebracht und kann zum vollständigen Schließen des Daches nach vorne verfahren werden. Die Öffnungslänge der resultierenden lichten Schiebedachöffnung 3, d.h. der Abstand zwischen der Kante 9 und der Kante 6 des Schiebedeckels 7 bzw. der Kante 10 sei wummerkritisch. Die in Fig. 1 dargestellte beispielhafte Ausführungsform der erfindungsgemäßen Abdeckung 5 befindet sich ganz oder teilweise auf Höhe des Schiebedeckels 7 in der Weise, daß eine partielle Abdeckung der im wesentlichen rechteckigen resultierenden Schiebedachöffnung 3 im hinteren Eckenbereich erfolgt. Zum Vergleich ist immer in der in Fahrtrichtung linken Hälfte des Daches ein nicht modifizierter Ausschnitt eines Schiebedaches abgebildet. Die Modifikation der hinteren äußeren Eckenbereiche kann sowohl einseitig, als auch beidseitig vorgenommen werden.

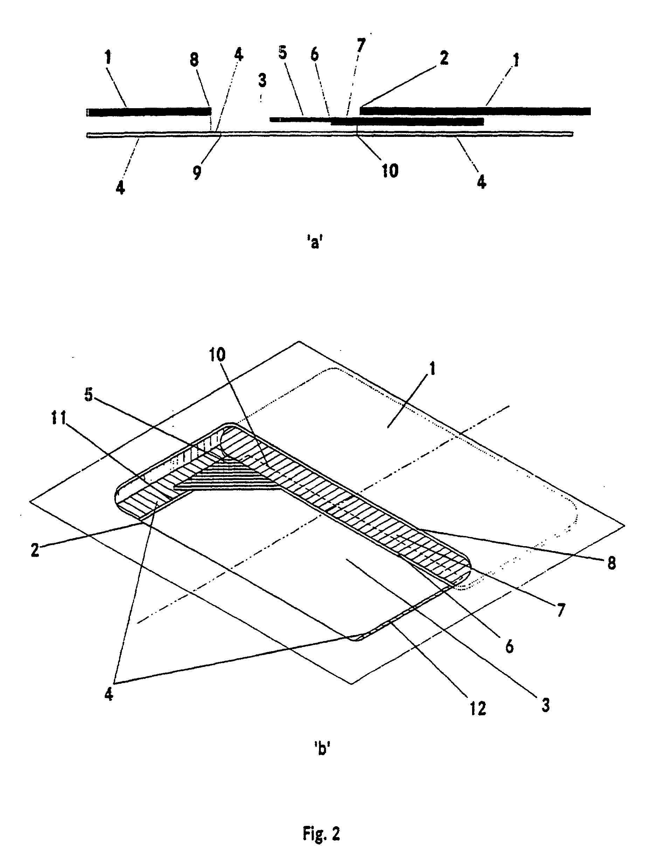

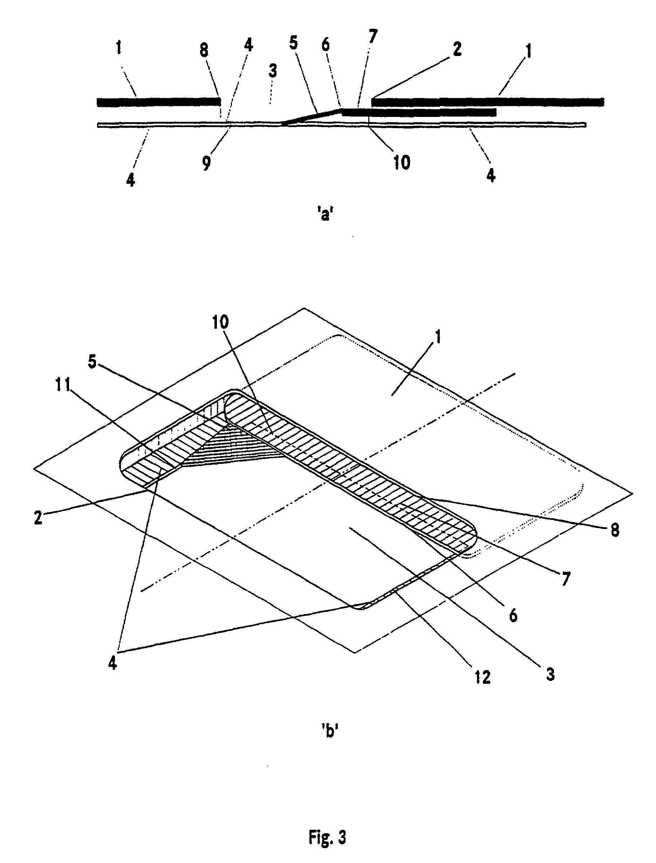

In den Querschnittszeichnungen senkrecht zur Fahrtrichtung Fig. 2 'a' und Fig. 3 'a' und den Schrägansichten Fig. 2 'b' und Fig. 3 'b' sind mögliche Positionierungsvarianten der erfindungsgemäßen Abdeckung 5 dargestellt. Die Fahrtrichtung des Fahrzeuges (=vorne) ist bei den Querschnittszeichnungen Fig. 2 'a' und Fig. 3 'a' in Richtung des linken Bildrandes orientiert, bei den Schrägansichten Fig. 2 'b' und Fig. 3 'b' in Richtung der linken unteren Bildecke. In den Fig. 2 'a' und Fig. 3 'a' sind das Dachblech 1, der vordere 2 und der hintere Rand 8 des Dachblechausschnittes, sowie das Innendach 4, die Schiebedachöffnung mit der vorderen Kante 9 und der hinteren Kante 10, eine vorteilhafte ebene Ausführungsform der erfindungsgemäßen Abdeckung 5, der Schiebedeckel 7 und dessen vordere Kante 6 erkennbar. In den beiden Schrägansichten Fig. 2 'b' und Fig. 3 'b' ist wie in Fig. 1 die resultierende lichte Schiebedachöffnung 3 mit den äußeren Kanten 9, 11, 12 und der in diesem Beispiel hinteren Kante 6 sichtbar. Fig. 2 zeigt eine ebene Ausführungsform der Erfindung, bei der die Modifikation der Geometrie der Ecken der resultierenden lichten Schiebedachöffnung 3 mittels der Abdeckung 5 vollständig auf Höhe des Schiebedeckels 7 vorgenommen wird. Fig. 3 stellt eine andere vorteilhafte Ausführungsform dar, bei der die Modifikation der Eckengeometrie der resultierenden lichten Schiebedachöffnung 3 mittels der Abdeckung 5 nach hinten auf Höhe des Schiebedeckels 7 vorgenommen wird, nach vorne hin jedoch bis auf die Höhe des innendaches 4 herunter reicht.

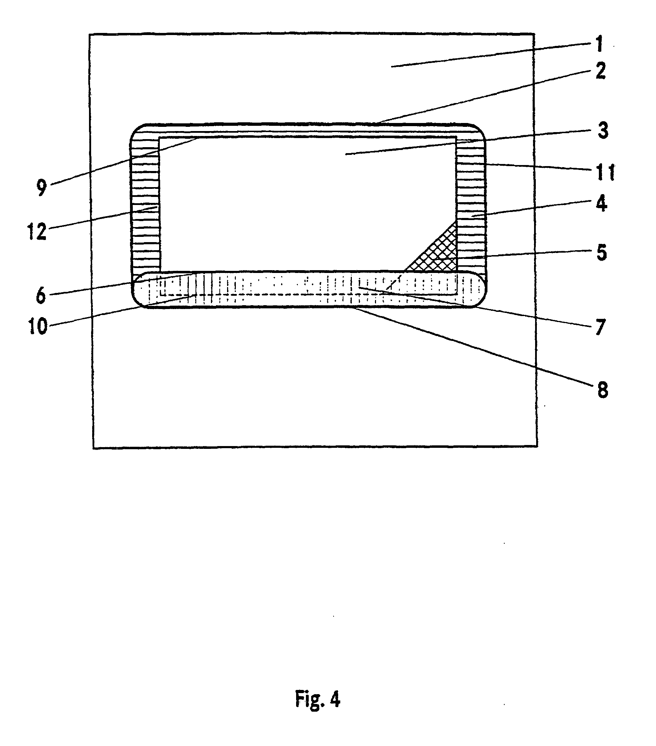

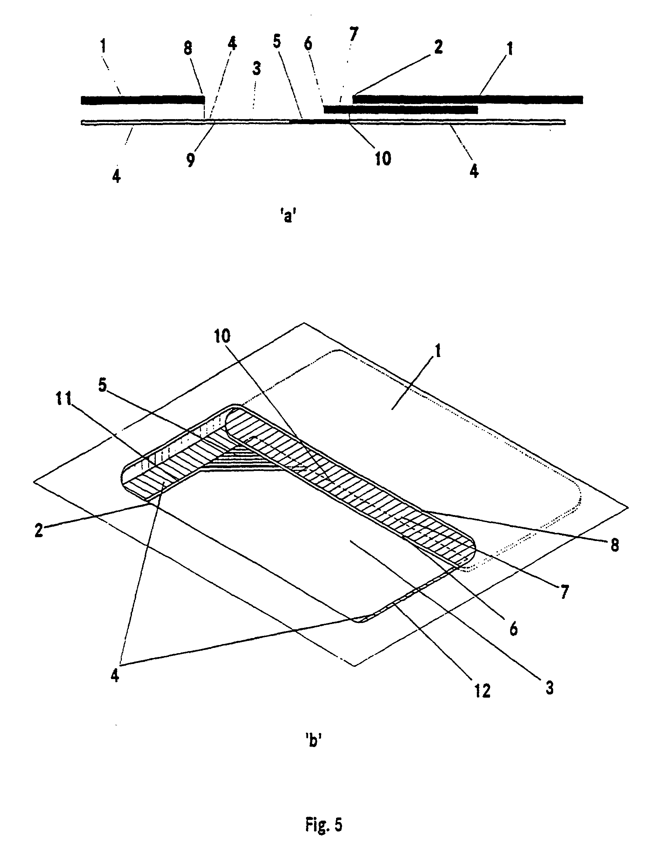

In den Fig. 4, Fig. 5 'a' und Fig. 5 'b' ist ein weiteres Ausführungsbeispiel der erfindungsgemäßen Vorrichtung skizziert. Die Draufsicht Fig. 4 entspricht perspektivisch und von den Bezeichnungen her Fig. 1. Hierbei ist die erfindungsgemäße Abdeckung 5, mit der die Modifikation der Eckengeometrie der resultierenden lichten Schiebedachöffnung 3 erreicht wird, auf Höhe des Innendaches 4 angeordnet. Die gezeigte vorteilhafte Ausführungsform der erfindungsgemäßen Abdeckung befindet sich teilweise hinter der Schiebedeckelkante 6 und wird daher z.T. vom Schiebedeckel 7 überdeckt. Dies wird in den Fig. 5 'a' und Fig. 5 'b' besonders deutlich sichtbar. Die ebene Ausführungsform der Modifikation 5 befindet sich deutlich unterhalb des Schiebedeckels 7 auf Höhe des Innendaches 4 und überdeckt einen Teil der hinteren Ecken der resultierenden lichten Schiebedachöffnung 3.

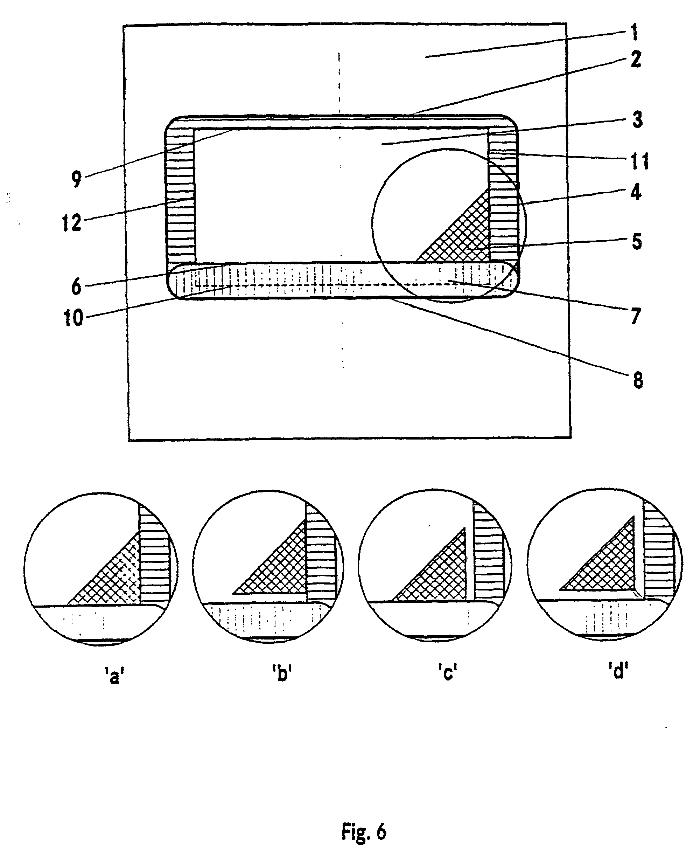

Neben den verschiedenen vertikalen (senkrecht zum Dachblech) Plazierungen der erfindungsgemäßen Abdeckung, wie sie z.B. in den Fig. 1 bis 5 dargestellt sind, können auch verschiedene horizontale (parallel zum Dachblech bzw. Innendach) Positionen zur Modifikation der Geometrie der hinteren Eckenbereiche der resultierenden lichten Schiebedachöffnung 3 vorteilhaft verwendet werden. In den Draufsichten Fig. 6 'a' bis 6 'd' sind einige solcher vorteilhaften Positionen dargestellt.

Fig. 6 'a' zeigt ein Ausführungsbeispiel, welches auf Höhe des Schiebedeckels 7 bündig mit der vorderen Kante 6 desselben abschließt. Nach der Seite liegt die gezeigte Ausführungsform der erfindungsgemäßen Abdeckung 5 in der Projektion auf das Innendach 4 an dessen Kante 11 an und kann, muß aber nicht notwendig, dicht mit den beiden Kanten 6 und/oder 11 verbunden sein. Bei der in Fig. 6 'b' dargestellten Ausführungsform liegt die Abdeckung 5 zwar in der Projektion auf das Innendach 4 an der Kante 11 an, im hinteren Bereich weist sie jedoch einen horizontalen Abstand zur Vorderkante 6 des Schiebedeckels 7 auf. Die Ausführungsform in Fig. 6 'c' hingegen sitzt bündig an der vorderen Kante 6 des Schiebedeckels 7, liegt jedoch in der Projektion auf das Innendach 4 nicht direkt an dessen Kante 11 an, während die in Fig. 6 'd' gezeigte vorteilhafte Ausführungsform weder an der Kante 6 noch an der Kante 11 anliegt.

Über die gezeigten Beispiele hinaus sind noch weitere vertikale (senkrecht zum Dachblech) und horizontale (parallel zum Dachblech bzw. Innendach) Positionen innerhalb des Schiebedachausschnittes zur Modifikation der Geometrie der hinteren Ecken dar resultierenden lichten Schiebedachöffnung 3 möglich. Die erfindungsgemäße Abdeckung kann neben den in Fig. 1 bis 5 gezeigten Positionen beispielsweise auch zwischen Schiebedeckel 7 und Innendach 4 oder aber auch oberhalb des Schiebedeckels 7 angeordnet werden. Je nach vertikaler Position der Abdeckung sind auch weitere horizontale Orientierungen als die in Fig. 6 beschriebenen in den Eckenbereichen denkbar. Die Modifikation kann . nach unten geneigt, ähnlich wie in Fig. 3, aber auch nach oben geneigt erfolgen.

Neigung und Position der Modifikation sind so zu wählen, daß die Projektion in die Ebene parallel zum Dachblech 1 bzw. zum Schiebedeckel 7 eine hinreichend große Versperrungsfläche im Bereich der hinteren Ecken der resultierenden lichten Schiebedachöffnung 3 ergibt.

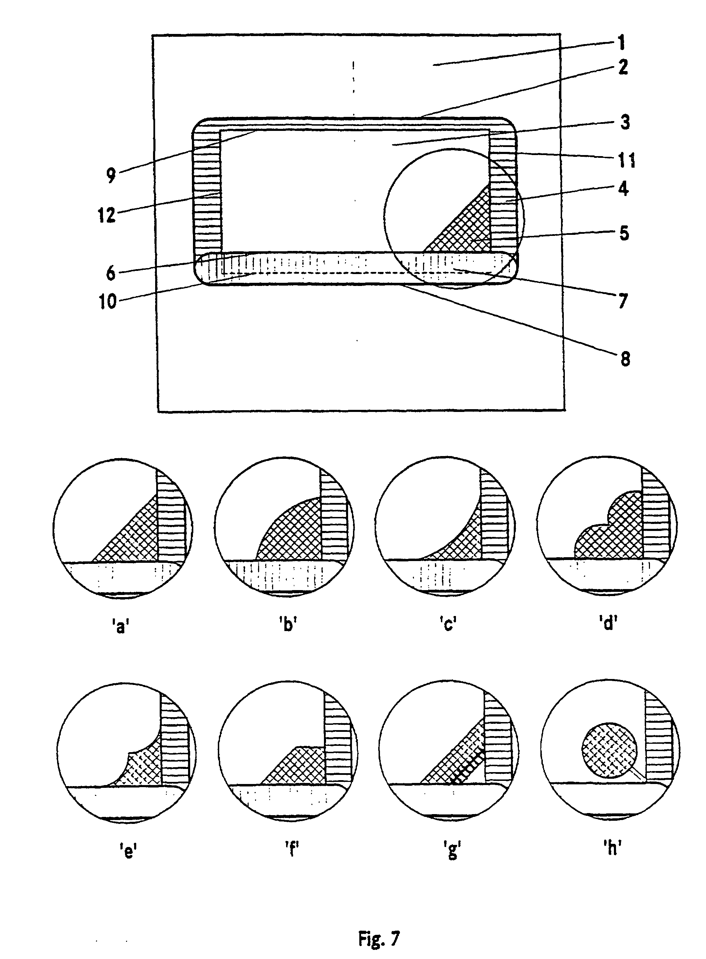

Für die erfindungsgemäße Abdeckung zur Modifikation der Eckengeometrie im hinteren Bereich der im wesentlichen rechteckigen oder trapezförmigen resultierenden lichten Schiebedachöffnung 3 eines herkömmlichen Schiebedaches kommen in der zum Dachblech parallelen Ebene grundsätzlich alle geometrischen Grundformen in Frage. Dies sind z.B. Dreieck, Rechteck, Trapez oder abgerundete Formen, wie Kreise oder konvexe bzw. konkave Bögen, sowie abschnittsweise Kombinationen aus Segmenten dieser Formen. Einige Beispiele solcher geometrischen Formen sind der Draufsicht nach Fig. 7 zu entnehmen. Beispielhaft ist die erfindungsgemäße Abdeckung 5 auf Höhe des Schiebedeckels 7 bündig mit selbigem und in der Projektion auf das Innendach 4 an dessen rechtem Rand 11 anliegend positioniert.
Fig. 7 'a' zeigt eine dreieckige Grundform der erfindungsgemäßen Abdeckung 5. In Fig. 7 'b' wurde diese dreieckige Grundform mit einem konvexen Bogensegment kombiniert. Fig. 7 'c' zeigt eine Kombination der dreieckigen Grundform mit einem konkaven Bogensegment. In Fig. 7 'd' ist eine solche Kombination mit abschnittsweise konvexen Bogensegmenten abgebildet, in Fig. 7 'e' ist die dreieckige Grundform mit konkaven Elementen kombiniert. Die Fig. 7 'f' und und 7 'g' zeigen zwei Beispiele trapezförmiger Eckenmodifikationen, während in Fig. 7 'h' eine kreisförmige Fläche einen Teil der hinteren Ecke der resultierenden lichten Schiebedachöffnung 3 verdeckt.

Neben den beschriebenen unterschiedlichen geometrischen Formen der erfindungsgemäßen Abdeckung in der Draufsicht auf das Schiebedach sind auch Wölbungen, Ausstülpungen oder andere Abweichungen von der ebenen zweidimensionalen Geometrie denkbar.

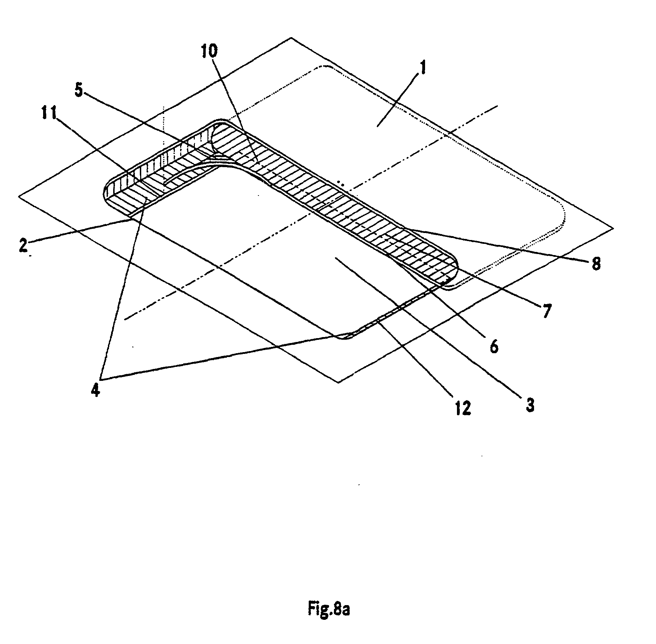

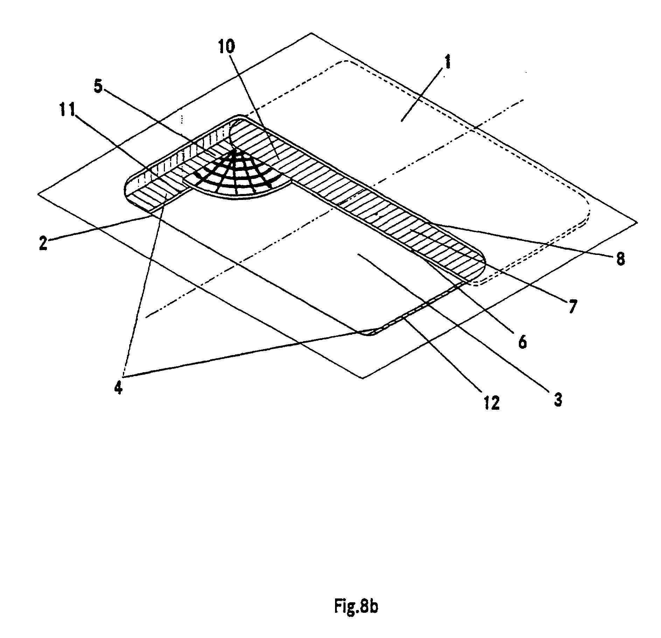

In Fig.8 'a' und Fig. 8 'b' sind zwei beispielhafte 'dreidimensionale' Ausführungsformen auf Höhe des Schiebedeckels 7 skizziert. Beide Ausführungsformen zeigen eine in der Draufsicht auf das Schiebdach dreieckige Grundform. In Fig. 8 'a' ist diese Grundform nach oben gewölbt, während Fig. 8 'b' eine Wölbung nach unten aufweist. Allen Ausführungsformen gemeinsam ist die Eigenschaft, daß die resultierende lichte Schiebedachöffnung 3 im Bereich der hinteren Ecken hinreichend stark verdeckt wird.

Die zur Modifikation der Ecken oder für ein dementsprechende Formgebung zu verwendenden Materialien sind so auszulegen, daß die Strömung im hinteren äußeren Eckenbereich der resultierenden lichten Schiebedachöffnung 3 hinreichend stark gestört werden kann. Dies kann geschehen mit starren, strömungsundurchlässigen Materialien, wie Stahlblech, Holz, Kunststoff, sowie mit elastischen ganz oder teilweise strömungsundurchlässigen Materialien, wie Tuch, Folie o.ä., welches im hinteren äußeren Eckenbereich der resultierenden lichten Schiebedachöffnung 3 mit einer entsprechenden Vorrichtung aufgespannt wird.

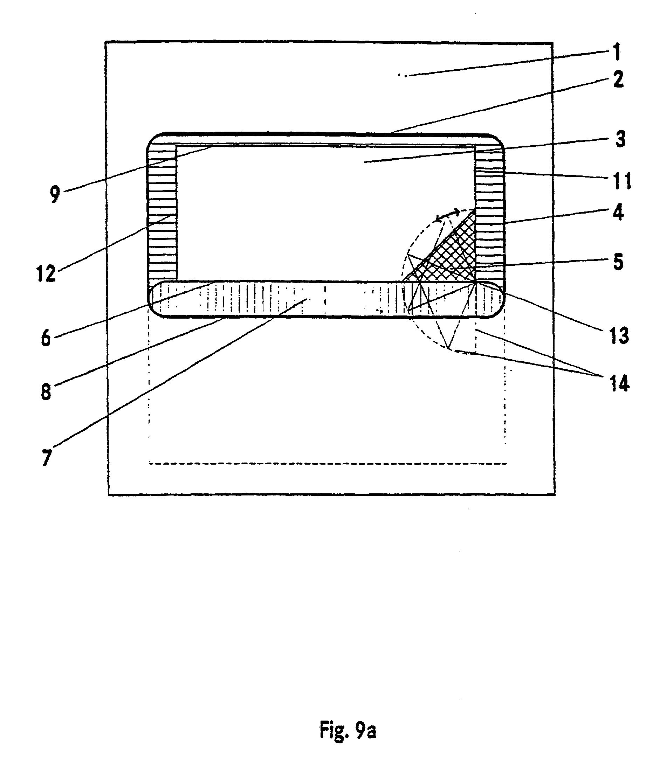

In einem Beispiel (Fig. 9a) für die technische Umsetzung an einem herkömmlichen, im wesentlichen rechteckigen Schiebedach wird die erfindungsgemäße Abdeckung 5 in einer Aussparung 14 im Schiebedeckel 7 verstaut. Die dargestellte Abdeckung 5 hat eine dreieckige, ebene Grundform und befindet sich auf Höhe des Schiebedeckels 7. Das Dreieck 5 wird an einer Ecke über einen Drehpunkt 13 mit der Vorderkante des Schiebedeckels 6 verbunden. Der Schiebedeckel 7 ist sandwichartig aufgebaut, so daß das ebene Dreieck 5 um den Drehpunkt 13 in den Deckel hineingedreht werden kann, wie in Fig. 9a skizziert. Beim Zurückfahren des Schiebedeckels kann ab der wummerkritischen Öffnungslänge der resultierenden lichten Schiebedachöffnung 3 die erfindungsgemäße Abdeckung beispielsweise mit einem Federmechanismus in den Bereich der hinteren Ecken der resultierenden lichten Schiebedachöffnung 3 hineinrotiert werden.

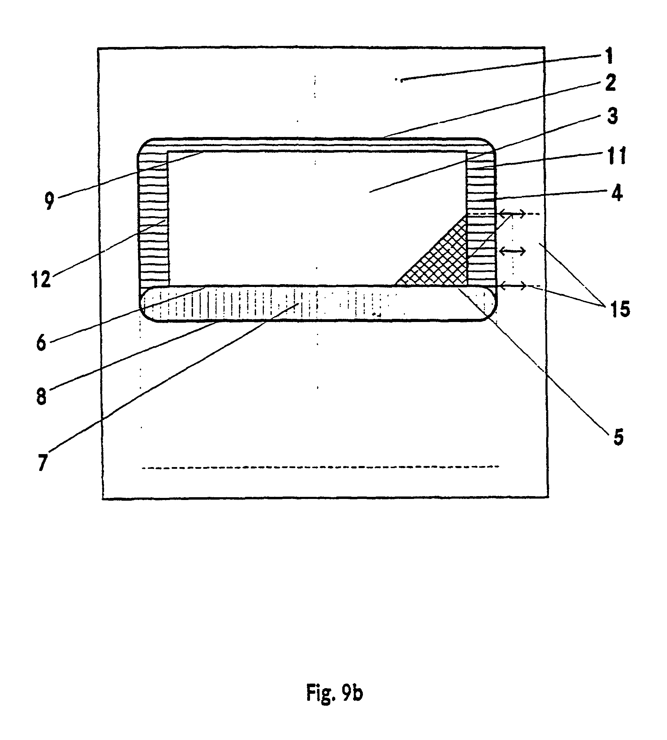

In einem weiteren Beispiel (Fig. 9b) wird die erfindungsgemäße Abdeckung 5, ausgebildet als ebenes Dreieck, in einer Aussparung 15 im äußeren Rand des Schiebedachausschnitts, zwischen Innendach 4 und äußerem Dachblech 1, beispielsweise auf Höhe des Schiebedeckels 7, verstaut. Hierbei wird die erfindungsgemäße Abdeckung beim Zurückfahren des Schiebedeckels 7 ab der wummerkritischen Öffnungslänge der resultierenden lichten Schiebedachöffnung 3 von außen her in den Bereich der hinteren Ecken der resultierenden lichten Schiebedachöffnung 3 hineingeschoben.

Der Vorteil der in Fig. 9 dargestellten Varianten liegt darin, daß bei Öffnungslängen, welche noch nicht wummerkritisch sind, keine unnötige zusätzliche Sichtversperrung erfolgt.

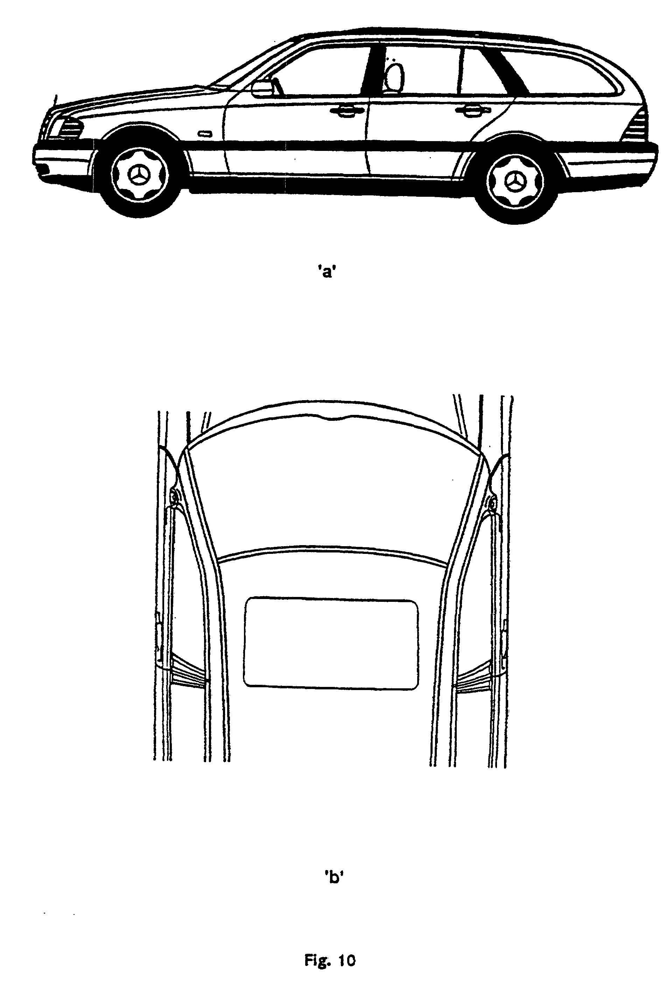

In einem konkreten Anwendungsbeispiel wird eine vorteilhafte Ausführungsform der Erfindung zur Reduktion des Wummems am Mercedes-Benz S202 (Kombi der C-Klasse) verwendet, welcher in der Grundkonfiguration (ohne Windabweiser) bei vollständig geöffnetem Schiebedach erheblich wummert.
Um eine bessere Vorstellung von der Position der erfindungsgemäßen Vorrichtung am Fahrzeug zu bekommen, ist dieses in Fig. 10 'a' als Seitenansicht dargestellt. Die Fahrtrichtung befindet sich in Richtung des linken Bildrandes. Fig. 10 'b' zeigt einen Ausschnitt des Fahrzeuges in Draufsicht von oben. Die Fahrtrichtung ist hier in Richtung des oberen Bildrandes orientiert. Das Schiebedach befindet sich, wie aus Fig. 10 'b' ersichtlich zur Fahrtrichtung symmetrisch in der Mitte des Dachbleches kurz hinter der Windschutzscheibe.

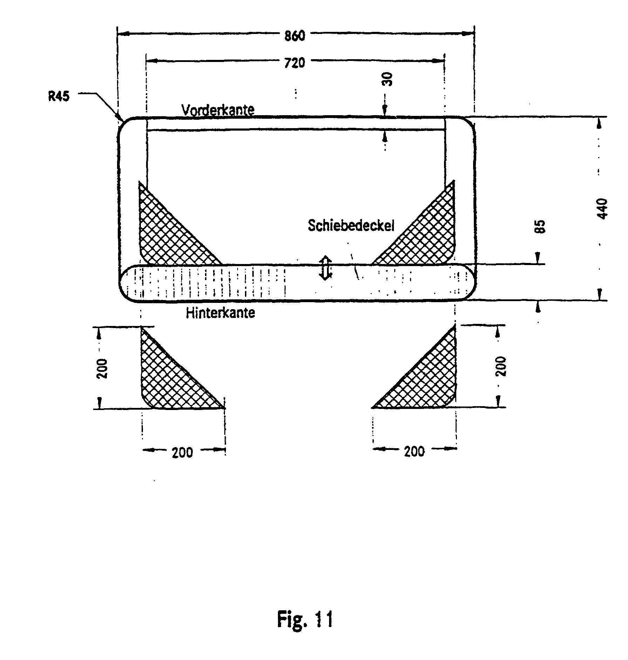

In Fig. 11 ist eine Draufsicht auf das Schiebedach des S202 bei vollständig zurückgefahrenem Schiebedeckel mit einem besonders wirksamen Ausführungsbeispiel der erfindungsgemäßen Abdeckung dargestellt. Die Fahrtrichtung befindet sich in Richtung des oberen Bildrandes. Die resultierende lichte Schiebedachöffnung wird hierbei in der Weise verändert, daß zwei aus einem starren Material, wie Holz oder Blech bestehende ebene dreieckige Brettchen in den hinteren Ecken auf Höhe des Schiebedeckels, bündig mit selbigem und dem Innendach angebracht werden. Die zwei rechtwinkligen gleichschenkligen dreieckigen Brettchen haben, wie in Fig. 11 erkennbar, eine Schenkellänge von 200 mm und eine Dicke von 5 mm. Der Ausschnitt im Dachblech beträgt beim Mercedes-Benz S202 wie aus Fig. 11 ersichtlich 440 mm x 860 mm. im vorliegenden Beispiel werden die Brettchen wegen der einfacheren Befestigungsmöglichkeiten mit dem Rand des Innendaches vom Schiebedeckel her um einige Grad nach vome unten geneigt angebracht. Die hier verwendete bündige Verbindung der Brettchen mit dem Rand des Innendaches und dem Schiebedeckel erfolgt mit Alu Tape (Scotch Pressure Sensitive Tape). Das Wummern des S202 kann auf diese Weise so weit reduziert werden, daß es subjektiv nicht mehr wahrnehmbar ist. Dieser meßtechnisch im Windkanal festgestellte Sachverhalt ist subjektiv durch erste Fahrversuche mit dem Fahrzeugtyp S202 (C-Klasse Kombi) bestätigt worden.

### Bezugszeichenliste

- 1: äußeres Dachblech des Fahrzeuges
- 2: Vorderkante des Schiebedachausschnittes
- 3: resultierende lichte Schiebedachöffnung
- 4: Innendach
- 5: erfindungsgemäße Abdeckung
- 6: Vorderkante des Schiebedeckels 7
- 7: Schiebedeckel
- 8: Hinterkante des Schiebedachausschnittes
- 9: Vordere Kante der Schiebedachöffnung im Innendach 4
- 10: Hintere Kante der Schiebedachöffnung im Innendach 4
- 11: Rechte Kante der Schiebedachöffnung im Innendach 4
- 12: Linke Kante der Schiebedachöffnung im Innendach 4
- 13: Drehpunkt
- 14: Aussparung im Schiebedeckel 7
- 15: Aussparung im Rand des Schiebedachausschnittes

## Patentansprüche

1. Schiebedach für Kraftfahrzeuge mit reduziertem Schiebedachwummern, umfassend eine Schiebedachöffnung sowie einen beweglichen Schiebedeckel (7) zur Abdeckung der Schiebedachöffnung, wobei abhängig von der aktuellen Stellung des Schiebedeckels (7) eine resultierende lichte Schiebedachöffnung (3) gebildet ist, **gekennzeichnet durch** eine Modifikation der Geometrie von Schiebedächern mit im wesentlichen rechteckiger oder trapezförmiger resultierender lichter Schiebedachöffnung **durch** teilweise oder vollständige Abdeckung (5) von mindestens einem der in Fahrtrichtung gesehen hinteren Eckbereiche der resultierenden lichten Schiebedachöffnung (3).

2. Schiebedach nach Anspruch 1, **dadurch gekennzeichnet, daß** die Abdeckung (5) mittels eines oder mehrerer separater, zuschaltbarer Elemente realisiert ist.

3. Schiebedach nach Anspruch 1 oder 2, **dadurch gekennzeichnet, daß** die Abdeckung (5) mittels entsprechender Formgebung der Schiebedachbauelemente realisiert ist.

4. Schiebedach nach einem der vorangehenden Ansprüche, **dadurch gekennzeichnet, daß** die Abdeckung (5) eine geometrische Grundform, wie Dreieck, Rechteck, Trapez oder eine abgerundete Form, wie Kreis oder konvexe oder konkave Bögen, oder abschnittsweise eine Kombination aus einzelnen Segmenten dieser Formen aufweist.

5. Schiebedach nach einem der vorangehenden Ansprüche, **dadurch gekennzeichnet, daß** die Abdeckung (5) eine in sich ebene Geometrie aufweist.

6. Schiebedach nach einem der vorangehenden Ansprüche, **dadurch gekennzeichnet, daß** die Abdeckung (5) und der in Fahrtrichtung gesehen vordere Bereich des Schiebedeckels (7) sich teilweise übertappen.

7. Schiebedach nach einem der vorangehenden Ansprüche, **dadurch gekennzeichnet, daß** die Abdeckung (5) Wölbungen, Ausstülpungen oder sonstige Abweichungen von der ebenen Geometrie aufweist.

8. Schiebedach nach einem der vorangehenden Ansprüche, **dadurch gekennzeichnet, daß** die Abdeckung (5) auf Höhe des Schiebedeckels (7), des Innendaches (4) oder beliebigen vertikalen Positionen dazwischen angeordnet ist.

9. Schiebedach nach einem der vorangehenden Ansprüche, **dadurch gekennzeichnet, daß** die Abdeckung (5) bündig mit dem in Fahrtrichtung gesehen hinteren Rand der resultierenden lichten Schiebedachöffnung (3) angeordnet ist.

10. Schiebedach nach einem der vorangehenden Ansprüche, **dadurch gekennzeichnet, daß** die Abdeckung (5) in der Projektion auf die resultierende lichte Schiebedachöffnung (3) an deren in Fahrtrichtung gesehen hinterem Rand anliegt.

11. Schiebedach nach einem der vorangehenden Ansprüche, **dadurch gekennzeichnet, daß** die Abdeckung (5) bündig mit dem seitlichen Rand (11,12) der resultierenden lichten Schiebedachöffnung (3) angeordnet ist.

12. Schiebedach nach einem der vorangehenden Ansprüche, **dadurch gekennzeichnet, daß** die Abdeckung (5) in der Projektion auf die resultierende lichte Schiebedachöffnung (3) an deren seitlichem Rand (11,12) anliegt.

13. Schiebedach nach einem der vorangehenden Ansprüche, **dadurch gekennzeichnet, daß** die Abdeckung (5) aus einem starren, strömungsundurchlässigen Material, wie Stahlblech, Holz, Kunststoff, Sicherheitsglas, o.ä. oder elastischen ganz oder teilweise strömungsundurchlässigen Materialien, wie Tuch, Folie o.ä., besteht.

## Claims

1. Sliding roof for vehicles, with reduced buffeting noise, comprising a sliding roof aperture and a movable sliding cover (7) to close off the sliding roof aperture, such that depending on the current position of the sliding cover (7) a resultant clear sliding roof aperture (3) is formed,
**characterised by**
a modification of the geometry of sliding roofs with an essentially rectangular or trapezium-shaped resultant clear sliding roof aperture by partial or complete covering (5) of at least one of the comer areas of the resultant clear sliding roof aperture (3) at the rear when viewed in the driving direction.

2. Sliding roof according to Claim 1,
**characterised in that**
the covering (5) is realised by means of one or more separate insert elements.

3. Sliding roof according to Claims 1 or 2,
**characterised in that**
the covering (5) is realised by appropriate shaping of the structural elements of the sliding roof.

4. Sliding roof according to any of the preceding claims,
**characterised in that**
the covering (5) has a basic geometrical shape such as a triangle, rectangle, trapezium or a rounded shape such as a circle or convex or concave curve, or is formed in sections by a combination of individual segments having these shapes.

5. Sliding roof according to any of the preceding claims,
**characterised in that**
the geometry of the covering (5) as such is flat.

6. Sliding roof according to any of the preceding claims,
**characterised in that**
the covering (5) and the front area of the sliding cover (7) as viewed in the driving direction partially overlap.

7. Sliding roof according to any of the preceding claims,
**characterised in that**
the covering (5) has vaulting, protuberances, or other deviations from flat geometry.

8. Sliding roof according to any of the preceding claims,
**characterised in that**
the covering (5) is arranged at the height of the sliding cover (7), the inner roof (4), or in any vertical positions between these.

9. Sliding roof according to any of the preceding claims,
**characterised in that**
the covering (5) is arranged flush with the edge of the resultant clear sliding roof aperture (3) at the rear when viewed in the driving direction.

10. Sliding roof according to any of the preceding claims,
**characterised in that**
the covering (5) is arranged such that its projection on the resultant clear sliding roof aperture (3) coincides with the edge of the latter at the rear when viewed in the driving direction.

11. Sliding roof according to any of the preceding claims,
**characterised in that**
the covering (5) is arranged flush with the lateral edge (11, 12) of the resultant clear sliding roof aperture (3).

12. Sliding roof according to any of the preceding claims,
**characterised in that**
the covering (5) is arranged such that its projection on the resultant clear sliding roof aperture (3) coincides with the lateral edge (11, 12) of the latter.

13. Sliding roof according to any of the preceding claims,
**characterised in that**
the covering (5) consists of a rigid material impermeable to air-flow, such as steel sheet, wood, plastic, safety glass or suchlike, or consists of an elastic material which is entirely or partially permeable to the air-flow, such as cloth, foil or suchlike.

## Revendications

1. Toit coulissant pour véhicules motorisés avec atténuation des bruits sourds du toit coulissant, comportant une ouverture de toit coulissant ainsi qu'un toit coulissant proprement dit, mobile (7), pour couvrir l'ouverture de toit coulissant, dans lequel une ouverture nette résultante (3) de toit coulissant est formée en fonction de la position actuelle du toit coulissant (7), **caractérisé par** une modification des caractéristiques géométriques des toits coulissants à ouverture nette résultante, essentiellement rectangulaire ou trapézoïdale, du toit coulissant par un recouvrement partiel ou total (5) d'au moins l'une des zones de coin arrière, vu dans le sens de la marche du véhicule, de l'ouverture nette résultante (3) du toit coulissant.

2. Toit coulissant selon la revendication 1, **caractérisé par le fait que** le recouvrement (5) est réalisé au moyen d'un ou de plusieurs éléments distincts à ajouter.

3. Toit coulissant selon la revendication 1, **caractérisé par le fait que** le recouvrement (5) est réalisé au moyen d'une conformation appropriée des composants du loit coulissant.

4. Toit coulissant selon l'une des revendications précédentes, **caractérisé par le fait que** le recouvrement (5) présente une forme de base géométrique, comme triangle, rectangle, trapèze ou une forme arrondie, comme cercle ou arc convexe ou concave, ou par tronçons, une combinaison de différents segments de ces formes.

5. Toit coulissant scion l'une des revendications précédentes, **caractérisé par le fait que** le recouvrement (5) présente une forme géométrique plane en soi.

6. Toit coulissant selon l'une des revendications précédentes, **caractérisé par le fait que** le recouvrement (5) et la zone avant, vu dans le sens de la marche du véhicule, du toit coulissant proprement dit (7) se recouvrent partiellement.

7. Toit coulissant selon l'une des revendications précédentes, **caractérisé par le fait que** le recouvrement (5) présente des bombements, des protubérances ou autres écarts d'une forme géométrique plane.

8. Toit coulissant selon l'une des revendications précédentes, **caractérisé par le fait que** le recouvrement (5) est disposé au niveau du toit coulissant proprement dit (7), au niveau du plafond intérieur (4) ou en des positions verticales quelconques entre eux.

9. Toit coulissant selon l'une des revendications précédentes, **caractérisé par le fait que** le recouvrement (5) est disposé à l'affleurement avec le bord arrière, vu dans le sens de la marche du véhicule, de l'ouverture nette résultante (3) du toit coulissant.

10. Toit coulissant selon l'une des revendications précédentes, **caractérisé par le fait qu'**en projection sur l'ouverture nette résultante (3) du toit coulissant, le recouvrement (5) s'appuie contre son bord arrière, vu dans la direction de la marche du véhicule.

11. Toit coulissant selon l'une des revendications précédentes, **caractérisé par le fait que** le recouvrement (5) est disposé à l'affleurement avec le bord latéral (11, 12) de l'ouverture nette résultante (3) du toit coulissant.

12. Toit coulissant selon l'une des revendications précédentes, **caractérisé par le fait qu'**en projection sur l'ouverture nette résultante (3) du toit coulissant, le recouvrement (5) s'appuie contre son bord latéral (11, 12).

13. Toit coulissant selon l'une des revendications précédentes, **caractérisé par le fait que** le recouvrement (5) est constitué d'un matériau rigide, imperméable à un écoulement, comme tôle d'acier, bois, plastique, verre de sécurité ou autres ou de matériaux élastiques totalement ou partiellement imperméables à un écoulement comme toile, feuille de métal ou autres.
